# FASCICULE DE BREVET EUROPEEN

(11) **EP 0 584 012 B1**
(45) Date de publication et mention de la délivrance du brevet: **15.05.2002**
(21) Numéro de dépôt: 93402046.2
(22) Date de dépôt: 11.08.1993
(51) Int. Cl.: H04B 7/204

(54) **Dispositif de commutation transparente, notamment pour le domaine spatial et charge utile utilisant un tel dispositif**
Gerät zur transparenten Signalpfadumschaltung, insbesondere in der Raumfahrttechnik, und dieses Gerät enthaltende Nutzlast
Device for transparent signal path switching, especially in the field of spacecraft, and payload incorporating such a device

(30) Priorité: 14.08.1992 FR 9210043
(43) Date de publication de la demande: 23.02.1994
(73) Titulaire: ALCATEL, 75008 Paris (FR)
(72) Inventeur: Mort, Robert, c/o ALCATEL ESPACE, F-3137 Toulouse Cedex (FR); Rouffet, Denis, F-92100 Boulogne Billancourt (FR)
(74) Mandataire: Smith, Bradford Lee

(56) Documents cités:
- GB-A- 2 169 474
- US-A- 4 858 225
- IEEE INTERNATIONAL CONFERENCE ON COMMUNICATIONS vol. 1, no. 8.2, Juin 1987, SEATTLE,US; pages 244 - 248 ANANASSO ET AL 'On-board technologies for user-oriented SS-FDMA satellite systems'
- IEEE INTERNATIONAL CONFERENCE ON COMMUNICATIONS vol. 3, no. 41.1, Juin 1989, pages 1255 - 1262 SHINONAGA ET AL 'L-band bandwith-variable SAW filter matrix for SS/FDMA SYSTEM'

## Description

L'invention concerne le domaine de télécommunications, notamment les télécommunications par voie hertzienne, et plus particulièrement les télécommunications par satellite. Les satellites de télécommunications reçoivent des signaux radioélectriques d'un ou plusieurs endroits sur la surface terrestre (liaisons montantes), les amplifient, et les transmettent à nouveau vers la terre (liaisons descendantes).

Dans l'évolution de télécommunications par satellite, l'on constate la croissance continue de la capacité de satellites en termes de nombre de canaux de communications qui peuvent transiter par le satellite de cette manière, ainsi que le débit dans chaque canal. Dans le but de maximiser le rendement d'un satellite en termes de service rendu pour argent investi, on cherche à prolonger la vie d'un satellite dans la mesure du possible, et simultanément d'accroître la quantité ainsi que la qualité du service qui peut être rendu.

Dans ce but, il faut minimiser l'utilisation de tout ce qui est ressource nécessaire pour réaliser et exploiter le segment spatial du système de télécom par satellite, et notamment : la masse et la taille de l'engin et des équipements embarqués ; la consommation de puissance électrique à bord ; et, depuis quelque temps déjà, il faut aussi ménager le spectre radioélectrique, qui est une ressource limitée et de plus en plus sollicitée.

Plusieurs de ces critères sont favorisés par l'utilisation de plusieurs faisceaux fins pour les liaisons descendantes, chaque faisceau étant formé pour optimiser son "empreinte" au sol, de façon à gaspiller le minimum d'énergie rayonnée en dehors de la région terrestre qui doit être servi par ce faisceau. Les faisceaux sont formés par des antennes à grand gain sur le satellite, chaque faisceau étant orienté vers sa région de service par la direction du lobe principal de l'antenne qui le rayonne.

Ainsi, une partie importante des satellites de télécommunications à l'état de l'art utilise un nombre croissant de faisceaux de plus en plus fin en liaisons descendantes. Selon le type d'antenne utilisée pour la formation de ces faisceaux, leurs positions (couverture au sol) peuvent être fixes ou variables (orientables). Dans tous les cas, cette évolution pose un problème qui est au coeur de la présente invention. Il s'agit pour le satellite de capter un signal qui provient d'un endroit donné, et de le retransmettre à un autre endroit sur une liaison descendante. Le problème qui se pose alors est un problème de commutation qui amène le signal d'une antenne de réception donnée, à travers l'électronique de charge utile vers une antenne de transmission particulière. Le problème devient plus complexe avec la croissance du nombre de canaux ou de signaux à traiter simultanément, multiplié par le nombre de destinations différentes de ces signaux.

Par canal, l'on entend par analogie avec l'historique des télécommunications terrestres par voie hertzienne, une bande de fréquence autour d'une fréquence centrale. Encore pour des raisons historiques, ce terme employé dans le domaine spatial fait référence à une division du spectre de transmission autorisé en canaux de 36 ou 72 MHz, la largeur de bande de transpondeurs classiques pour les applications de téléphonie ou de télévision. Pour les besoins de commutation, par contre, l'on peut considérer par généralisation, qu'un canal soit constitué par le chemin suivi par un signal entre une provenance et une destination. Dans le cas de satellites actuellement sur orbite, cette généralisation du concept de canal coïncide avec la définition classique précédente.

Dans l'art antérieur, l'on connaît des systèmes de charge utile de satellite qui permettent la commutation de canaux à bord du satellite, entre une voie d'entrée et une voie de sortie. Le besoin de cette capacité de commutation est fondamentale, par exemple, pour assurer la redondance des composants clés éventuellement défaillants. En cas d'une panne d'amplificateur de puissance, par exemple, il est nécessaire de pouvoir commuter les signaux sur un autre amplificateur de secours, pour pouvoir continuer à assurer la liaison.

Classiquement, cette commutation est effectuée par des commutateurs électromagnétiques sur des lignes de transmission en guide d'ondes, pour des canaux de 36 ou 72 MHz de bande. Dans de tels systèmes, il importe de minimiser le nombre de commutateurs et de lignes en guide à cause du poids et de l'encombrement de ces éléments. Cette contrainte constitue, de ce fait, une contrainte majeure en ce qui concerne la conception d'architecture de charge utile de l'art antérieur. Ainsi des systèmes de transmission ont été conçus pour maximiser le trafic qui peut être acheminé par une architecture de ce type, canalisé en 36 ou 72 MHz.

En particulier, pour pouvoir acheminer les communications d'un nombre croissant de clients sur une charge utile dont le nombre de canaux doit rester fixe la vie (du satellite) durant, on a conçu des systèmes de codage de signaux tels l'AMRT et l'AMRF (l'Accès Multiple par Répartition en Temps, en Fréquence, respectivement). Des signaux codés de cette manière peuvent acheminer les communications d'un très grand nombre de clients simultanément, à condition que ces clients utilisent les mêmes configurations des commutateurs sur guides d'ondes à bord du satellite. Cette configuration reflète en général un chemin entre une antenne de réception et une antenne de transmission à bord du satellite, et, par extension, entre un faisceau de liaison montante et un autre de liaison descendante, donc entre un lieu géographique d'origine et un autre lieu géographique de destination sur le globe terrestre.

Il est évident que ce genre de système manque de souplesse, dès lors que de nombreux utilisateurs dispersés géographiquement désirent communiquer avec des lieux géographiques couverts par des faisceaux différents, tous en même temps. De plus, les différents utilisateurs ont des besoins différents en ce qui concerne la largeur de bande nécessaire pour leurs communications, ce qui tient au débit d'informations nécessaires. La présente invention a pour objet un dispositif de commutation qui permet de servir un plus grand nombre d'utilisateurs simultanément, même en cas d'une très grande dispersion géographique des lieux d'origine des signaux ainsi que des lieux de destination des signaux, et qui permet aussi de servir avec une efficacité maximale les demandes variables en largeur de bande de ces différents utilisateurs.

L'invention permet l'évolution des capacités de la charge utile, de manière à accompagner l'évolution prévisible du nombre et des différents types d'utilisateurs. Bientôt en Europe, l'accès aux télécommunications par satellites ne sera plus réservé aux seuls instances nationales et internationales tels les PTT ou l'INTELSAT. En particulier, l'évolution du marché de télécommunications par satellite met en évidence l'émergence des utilisateurs à titre privé, telles les entreprises multinationales, par exemple, qui souhaitent communiquer avec leurs filiales dispersées géographiquement par un réseau privé de communications. Ces utilisateurs loueront une partie de la capacité d'un satellite pour leur besoins, et il s'agit pour le satellite de pouvoir être configuré pour satisfaire le nombre maximum d'utilisateurs simultanément.

Ainsi les études de satellites futurs de télécommunications sont concernées par un nombre croissant de "pinceaux" qui sont des faisceaux fins de réception et/ou de transmission, déterminés par les lobes principaux des antennes embarquées sur le satellite. Le problème est d'interconnecter ces pinceaux à bord du satellite pour assurer la liaison voulue. Le principe de commutation selon l'invention est alors d'allouer un chemin entre deux pinceaux fins, de largeur de bande variable et de fréquence centrale variable. Le dispositif selon l'invention cherche à pouvoir réaliser n*m chemins de ce type, n étant le nombre de liaisons montantes desservies et m étant le nombre de liaisons descendantes desservies. Plusieurs schémas sont possibles suivant la largeur de la totalité de la bande en fréquence à commuter, le nombre de pinceaux, et le degré de flexibilité souhaité.

L'article de Piétro V. de SANTIS, intitulé "Non-régénérative satellite switched FDMA (SS/FDMA) payload technologies", publié dans International Journal of Satellite Communications, v.5, pp.171-182 (1987), par John Wiley and Sons, Ltd. décrit le principe et plusieurs idées pour l'implémentation de tels systèmes. En particulier, une description complète de l'opération de démultiplexage à largeur de bande variable et à fréquence centrale variable est donnée, au moins dans son principe. Différentes filières technologiques sont examinées et comparées en vue de la réalisation d'un tel système, y compris des dispositifs à ondes acoustiques de surface (OAS), des ondes magnétostatiques (OMS), et MMIC (monolithic microwave integrated circuits, en anglais).

Sur la colonne gauche de la page 177, dernier paragraphe, cet article fait état des inconvénients de la technologie OAS, et prône la technologie OMS pour surmonter ces difficultés. En effet, pour fonctionner correctement en bande variable, il est essentiel que l'amplitude et le délai de propagation de groupe dans les différents filtres passe-bande OAS restent uniforme dans les régions (en fréquence) entre filtres voisins. Un autre inconvénient, selon l'auteur, est que les composants OAS sont en général utilisés à des fréquences intermédiaires. L'auteur nous réfère à un autre article , de H. SHINONAGA et Y. ITO, INTITULE "SS/FDM System for Digital Transmission" publié dans les Proceedings de la 7ème Conférence Internationale sur Digital Satellite Communications, 12-14 May, Munich, Germany, 1986, qui fait état d'une combinaison cohérente en phase et en amplitude de deux filtres OAS en parallèle. Un dispositif similaire est décrit par les mêmes auteurs dans la demande de brevet GB 2 169 474 A, déposée le 19.12.1985 revendiquant une priorité japonaise du 24.12.84. Un article plus récent par les mêmes auteurs, intitulé "SS/FDMA Router for Flexible Satellite Communications Networks", paru dans IEEE Journal on Selected Areas in Communications, v.10(2), pp. 391-400 (February 1992), décrit une réalisation dans laquelle la bande d'un transpondeur 72 MHz est divisée en quatre sous-bandes, d'abord en divisant en deux sous-bandes de 35 MHz, et ensuite en divisant l'une de ces deux bandes de deux sous-bandes de 17 MHz.

La Demanderesse a choisi de développer une configuration originale qui semble mieux répondre aux exigences et contraintes imposées dans un tel système. Par exemple, des applications ont été étudiées par la Déposante pour l'utilisation de la moitié de la bande attribuée au Service Fixe par Satellite (SFS) entre 12,5 et 12,75 GHz, soit 125 MHz. En largeur de bande, cette bande correspond à trois répéteurs classiques de 36 MHz, avec des bandes de garde de 4 MHz environ. La flexibilité visée est celle qui permettrait d'acheminer deux porteuses 2Mb/s MDP4 non-codées ou une porteuse 2Mb/s MDP2 codée par un code de rendement 1/2. On choisit alors un quantum de bande de 3 MHz, avec des bandes de garde d'environ 3,5 MHz. La bande totale instantanée est donc à partager entre les différents utilisateurs simultanés par des quanta de 3 MHz. Le commutateur selon l'invention sera donc appelé à connecter différentes sous-bandes provenant des origines différentes, avec des destinations différentes, alors que ces sous-bandes peuvent être de largeur de bande différentes et variables, et avec fréquences centrales de chaque sous-bande différentes et variables aussi. Dans une réalisation optimale, le commutateur sera "transparent" aux signaux qui sont acheminés, quel que soit la forme des signaux, leur codage (AMRT, AMRF, MDP2 4, 8, 16, ...), leur structure temporelle, leur largeur de bande, leur fréquence centrale, leur origine ou leur destination.

A ces fins, l'invention propose un dispositif de COMMUTATION TRANSPARENTE, notamment pour le domaine spatial, des Architectures de charge utile utilisant un tel dispositif, et des Procédés de mise en oeuvre du dispositif et des architectures.

Plus précisément, l'invention propose un dispositif de banc intégré de filtres associables par commutation (acronym : BIFFAC) selon la revendication 1.

Selon une caractéristique avantageuse, le dispositif comprend des filtres passe-bande réalisés en technologie de composants ondes acoustiques de surface (OAS). Selon une autre caractéristique, plusieurs de ces filtres sont intégrés sur un seul substrat, et éventuellement plusieurs de ces substrats sont utilisés pour couvrir toute la bande désirée. Alternativement, ces filtres peuvent être réalisés en technologie numérique.

Selon une autre caractéristique d'une variante du dispositif, plusieurs filtres sont intégrés avec une matrice de commutation et de combinaison dans un même boîtier, formant un module de commutation transparente. La charge utile peut alors comprendre un ou plusieurs modules de ce type. Selon une variante, des filtres et une matrice peuvent être intégrés sur un seul et même substrat.

Selon différentes variantes, les filtres OAS peuvent être réalisés sur des substrats en LiNbO₃ , en LiTaO₃ , en quartz,...

Différentes architectures sont également proposées pour la mise en oeuvre des dispositifs selon l'invention. Plus précisément, l'invention propose une charge utile dans le domaine spatial selon la revendication 10. Avantageusement, l'architecture selon une variante de l'invention comprend également un ensemble de changement de fréquences, qui peut être, selon une autre caractéristique, divisé en plusieurs sous-ensembles de changement de fréquences afin d'effectuer plusieurs changements de fréquences à bord du satellite lors de l'acheminement du signal à commuter.

Selon une variante, ledit ensemble de changement de fréquences comprend deux sous-ensembles de changement de fréquences : un premier sous-ensemble qui effectue un premier changement depuis la fréquence du signal d'entrée Si vers une fréquence intermédiaire FI, utilisant un premier oscillateur local qui est de la même fréquence pour tous les signaux et tous les BIFFACs, et après filtrage dans lesdits filtres et après commutation et combinaison en phase dans lesdites matrices, un deuxième sous-ensemble effectue un deuxième changement de fréquence, utilisant un deuxième oscillateur local, depuis FI vers une fréquence finale du signal de sortie So pour la liaison descendante ; de façon à ce que la largeur de bande en Fréquence Intermédiaire est la même que la largeur de bande du signal Si d'entrée et du signal So de sortie.

Selon une autre variante, ledit ensemble de changement de fréquences comprend trois sous-ensembles de changement de fréquences, qui effectuent quatre changements successifs de fréquences : un premier changement depuis la fréquence du signal Si vers une première fréquence intermédiaire (FI₁) est effectué utilisant une seule fréquence d'oscillateur local pour tous les signaux Si ; un deuxième changement de fréquence vers une deuxième fréquence intermédiaire (FI₂) avant l'application à l'entrée desdits dispositifs selon la revendication 1 (BIFFACs), tous les BIFFACs ayant la même fréquence centrale, cette deuxième fréquence FI₂ étant la même pour tous les BIFFACs, ce qui demande plusieurs fréquences d'oscillateurs locaux (au moins un pour chaque BIFFAC) ; après filtrage dans lesdits filtres , et après commutation et combinaison en phase dans lesdites matrices, un troisième changement de fréquences est effectué vers la première fréquence intermédiaire FI₁, utilisant les mêmes oscillateurs locaux que dans le changement précédent ; et enfin un quatrième changement de fréquence est effectué par le troisième sous-ensemble vers une fréquence finale du signal So de liaison descendante.

Selon une autre variante, ledit ensemble de changement de fréquences comprend un sous-ensemble de changement de fréquences pour chaque signal Si d'entrée (liaison montante) et pour chaque signal So de sortie (liaison descendante), et la répartition des fréquences d'utilisation est effectuée de telle manière que les largeurs de bande des signaux d'entrée Si et de sortie So sont des multiples en nombre entier des largeurs de bande élémentaire d'un BIFFAC.

Selon des variantes, les fréquences Fcᵢ et Fcₒ peuvent être différentes ou similaires. Il est à noter, cependant, les possibilités d'interférences entre les voies d'émission et de réception dans le cas ou elles seraient similaires. Ce problème peut alors être surmonté, soit par une excellente isolation entre les voies de réception et d'émission, par diversité de l'espace, soit en utilisant des codages temporaux qui permettent de fermer la voie de réception pendant l'émission. Pour cette raison, il est pour le moment préférable que ces fréquences soient différentes.

Finalement, différentes variantes proposées permettent une évolution de l'infrastructure existante vers les solutions proposées dans le cadre de l'invention. En particulier, pour une meilleure compatibilité avec des transpondeurs canalisés d'une largeur de bande soit de 36, soit de 72 MHz, l'on prévoit que les bandes élémentaires à commuter seront d'une largeur de bande inférieure à 36 MHz. Pour tirer un meilleur avantage de l'utilisation de la commutation transparente telle que proposée par l'invention, il est avantageux que la largeur de bande des signaux à commuter soit sensiblement inférieure à 36 MHz, pour au moins une partie importante des signaux à acheminer. De la même manière, il est avantageux de choisir, pour la largeur de bande ΔΦ des filtres passe-bande, une valeur sensiblement inférieure à 36 MHz. Dans une variante particulièrement avantageuse de l'invention, la largeur de bande ΔΦ des filtres passe-bande est égale ou inférieure à 6 MHz.

D'autres caractéristiques et avantages de l'invention ressortiront de la description détaillée qui suit, avec ses dessins annéxés, dans lesquels :
- la figure 1 représente schématiquement dans sa partie la un exemple d'un banc intégré de filtres associables par commutation (BIFFAC) selon l'invention, ainsi qu'un plan de fréquences pour les filtres passe-bande du dispositif dans sa partie 1b ;
- la figure 2 représente schématiquement un exemple de l'association de deux BIFFACS selon l'invention en parallèle pour obtenir une bande d'utilisation deux fois plus large que dans le cas précédent ;
- la figure 3 représente schématiquement les différentes combinaisons possibles et les possibilités de filtrage qui en résultent, dans le plan des fréquences, à partir de six filtres élémentaires intégrés dans un BIFFAC selon l'invention ;
- la figure 4 représente schématiquement un exemple d'architecture de charge utile utilisant plusieurs dispositifs de BIFFAC selon l'invention, apte à effectuer des commutations bande étroite;
- la figure 5 représente schématiquement un exemple d'architecture de charge utile utilisant plusieurs dispositifs de BIFFAC selon l'invention, apte à effectuer des commutations bande large ;
- la figure 6 représente schématiquement un exemple d'architecture de charge utile utilisant plusieurs dispositifs de BIFFAC selon l'invention, apte à effectuer des commutations bande intermédiaire.

Les figures sont données à titre d'exemple, et ne sont pas limitatives, ni en ce qui concerne l'objet de l'invention ni l'étendue de la protection revendiquée. Sur les différentes figures, les mêmes éléments portent les mêmes références.

Sur la figure la, l'on voit un exemple d'un banc intégré de filtres associables par commutation (BIFFAC) selon l'invention. L'exemple montré est volontairement simple pour illustrer le principe de l'invention ; cependant, on verra plus loin que le dimensionnement choisi dans cet exemple est avantageux pour la réalisation d'un BIFFAC selon certains choix technologiques préférés.

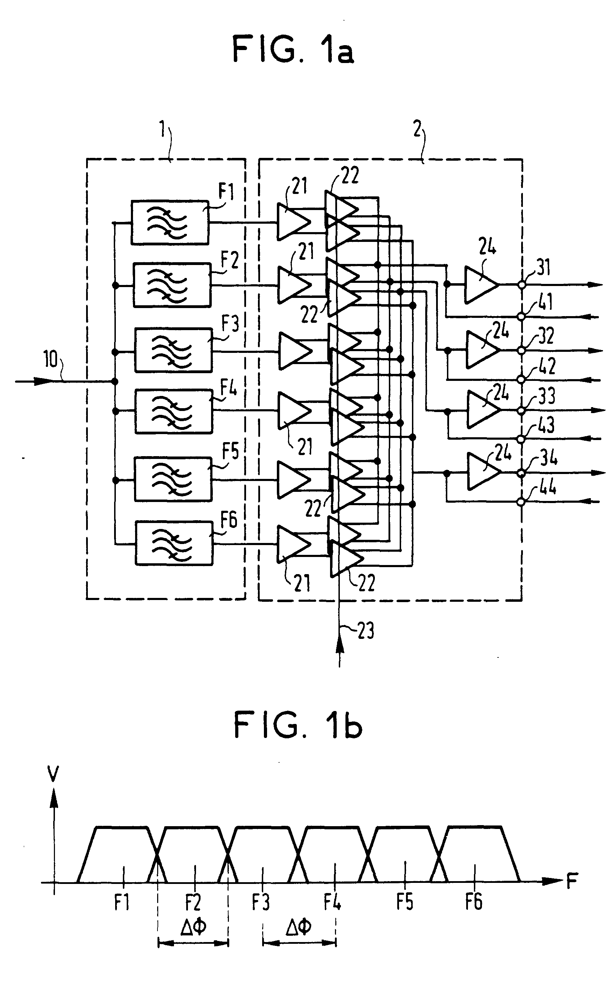

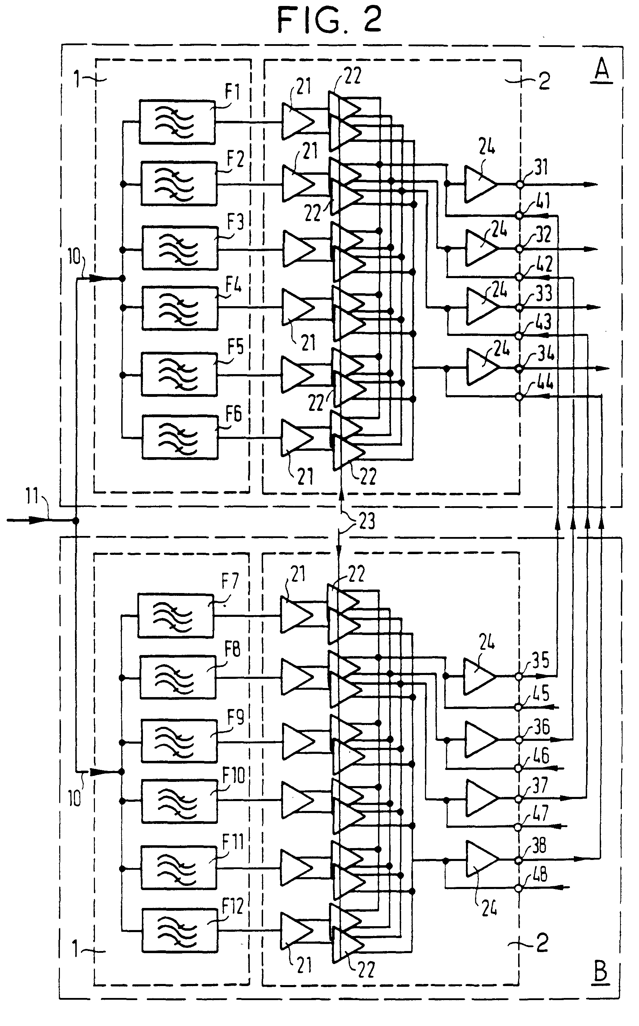

Le BIFFAC de la figure la consiste en deux grandes parties : un banc (1) de filtres passe-bande (F1, F2, F3, F4, F5, F6) et une matrice (2) de commutation et combinaison ou sommation. La configuration de la figure 1a correspond à un démultiplexage ; le multiplexage sera accompli avec un dispositif similaire mais inverse par rapport au dispositif de cette figure. Le signal d'entrée Si à commuter, appliqué à l'entrée (10) du dispositif de BIFFAC selon l'invention, est appliqué à l'entrée de tous les filtres passe-bande (F1-F6) en parallèle. Comme montré sur la figure 1b, les filtres ont un passe-bande de ΔΦ pour tous les filtres, et la différence de leur fréquences centrales fⱼ, fⱼ₊₁ entre deux filtres voisins Fj, Fj+1 est sensiblement égale à ΔΦ .

Les filtres sont ainsi contigus en fréquence. Selon une caractéristique préférée de l'invention, ces filtres sont aussi contigus physiquement, et peuvent être réalisés sur un seul substrat pour gagner en poids et en encombrement. Un autre avantage d'un telle configuration est que des variations éventuelles en température affecteront tous les filtres de la même façon, et donc n'auront pas d'effet néfaste sur les signaux qui traversent le dispositif.

Un signal Si présenté à l'entrée (10) du dispositif est ainsi analysé en fréquence par le banc de filtres passe-bande contigus (F1-F6). Si l'on suppose que ce signal Si est un signal multiplexé en fréquence selon un plan des fréquences qui ressemble au plan de fréquences de la figure 1b, le signal sera effectivement démultiplexé par le banc de filtres, et rendu en ses composantes distinctes. Ensuite, la sortie de chaque filtre passe-bande (F1-F6) est reliée à une entrée (21) de la matrice (2) de commutation et de combinaison (ou de sommation). Dans la suite de la description, les mots combinaison ou sommation peuvent être utilisés indifféremment pour désigner la même opération.

Sur la figure 1a, les entrées (21) sont représentées par des .symboles d'amplificateur. Dans le dispositif selon l'invention, cet amplificateur permet, d'une part, d'ajuster l'amplitude relative des signaux qui se propagent dans les différents filtres, pour permettre leur réassemblage après démultiplexage sans introduire des distorsions d'amplitude en fonction de la fréquence ; et d'autre part, de compenser les pertes d'insertion éventuelles du banc des filtres (1). En effet, ces pertes peuvent être assez élevées (de l'ordre de 20 à 30 dB dans le cas des filtres OAS). En deuxième effet, dans des réalisations pratiques, un amplificateur à cet endroit, même de gain d'unité, peut servir à isoler le banc (1) de filtres de la matrice (2) pour éviter des effets transitoires se propageant en sens inverse. Ces amplificateurs d'entrée (21) sont ensuite reliés à des commutateurs du type SPXT, ou X correspond au nombre de voies de sortie (31-34) de la matrice (2) ; dans l'exemple de la figure 1a, elles sont au nombre de quatre. Pour simplifier la logique de commande (23), on peut, comme il est montré sur cette figure, décomposer les commutateurs SPXT correspondant à chaque filtre passe-bande (F1-F6) en X/2 commutateurs SPDT (22).

Les commutateurs SPDT (22) sont ensuite tous reliés entre eux par leurs sorties respectives, tel que montré sur la figure. Ainsi, la matrice (2) effectue une sommation des signaux sur les sorties de première position de tous les commutateurs SPXT, pour les livrer à la première sortie (31) de la matrice (2) moyennant un amplificateur (24), en même temps qu'une sommation de tous les signaux sur les sorties de deuxième position de tous les commutateurs SPXT, et ainsi de suite. Cette sommation est obtenue par un coupleur passif pour chaque voie, relié à l'entrée d'un amplificateur (24) de sortie pour chaque voie. La géométrie de ce coupleur passif est conçue pour conserver la cohérence en phase des signaux se propageant sur des voies parallèles, c'est-à-dire les composantes de fréquence centrale différente, se propageant à travers des filtres passe-bande différents et des commutateurs différents. Autrement dit, le temps de propagation doit être sensiblement le même pour tous les signaux destinés à une sortie donnée.

Ainsi, le dispositif de BIFFAC selon l'invention est accordé en amplitude et en phase, pour les signaux se propageant à travers le banc (1) de filtres et la matrice (2) de combinaison ou de sommation.

Il est également prévu, comme la figure 1a l'indique, des entrées auxiliaires (41-44) qui sont reliées directement sur les entrées des amplificateurs (24) de sortie, ce qui permet le raccordement en parallèle de plusieurs BIFFACs élémentaires, de façon à obtenir une bande de fonctionnement (de démultiplexage, par exemple) plus large. Une telle configuration est montrée sur la figure 2.

Plusieurs concepts sont possibles pour réaliser la fonction qui a été décrite plus haut. Ils vont être passés en revue dans ce qui suit. En examinant la partie filtres à ondes de surface, puis la partie commutation/combinaison.

Cinq types de réalisation sont possibles :

### a. Transformée de Fourier à chirp

Le principe de cette réalisation est de transformer la totalité du signal montant en une série spectrale temporelle, puis par échantillonnage assurer le filtrage et le routage. Les signaux de sortie sont obtenus par transformée inverse.

Malgré la puissance de cette méthode de traitement du signal, la technologie limite la bande passante de chaque composant à environ 10MHz et surtout la dynamique à moins 30dB.

### b. BSSF (Bandwidth Switchable SAW Filters)

Un banc de filtres discrets, adjacents et commutables est réalisé. La conception de ces filtres est telle qu'il est possible, par une combinaison en phase, de réaliser des bandes passantes différentes. La stabilité en température entre filtres et les fortes pertes posent problème, de même que la masse élevée de chaque ensemble.

### c. Filtres cascadés

N filtres périodiques de bandes passantes différentes sont mis en cascade, ce qui permet de sélectionner N largeurs de bande. Les principaux inconvénients de cette méthode sont le faible nombre de largeurs de bande réalisables ainsi que le niveau des pertes d'insertion.

### d. Filtres VBVCF

Les filtres à fréquence centrale variable et à bande passante variable (VBVCF) peuvent être réalisés par la mise en cascade de deux filtres à ondes de surface, chacun d'entre eux étant précédé et suivi d'un mélangeur dont l'OL est réalisé à l'aide d'un synthétiseur. Le recouvrement des bandes des filtres fixe la bande passante et la fréquence centrale. Cette méthode n'est pas souhaitable dès que le nombre de chemins de connexion est élevé car la complexité du matériel croît très rapidement. Egalement la pureté spectrale des oscillateurs et les performances en bord de bande des filtres peuvent être critique s.

### e. Onde de surface à bande variante (BVS)

Ce principe qui est celui qui a été retenu, comprend un banc de filtres intégrés sur un même substrat. Le transducteur d'entrée peut être réalisé de façon à minimiser les pertes ordinairement présentes dans un filtre passe-bande.

Un équilibrage précis en phase des différents filtres est nécessaire pour permettre la concaténation des réponses de filtres adjacents.

Sur la figure 2, en effet, on reconnaît deux BIFFACs (A, B) conformes tous deux à celui que l'on a vu sur la figure la, et qui sont connectés en parallèle. Comme dans la figure 1a, la configuration montrée est pour le démultiplexage, mais un multiplexeur aura la même configuration sauf inversée. Un signal Si présenté à l'entrée 11 est appliqué simultanément sur les entrées 10 de deux BIFFACs (A, B). Tout se passe comme dans le cas précédent. La fréquence centrale f₇ du filtre passe-bande F7 peut être choisie différente de la fréquence centrale f₆ du filtre passe-bande F6 par un espacement sensiblement égal à la largeur de bande passante ΔΦ des filtres passe-bande. Dans ce cas, le dispositif montré sur cette figure 2 fonctionne exactement comme le dispositif de la figure la, mais avec une bande totale de fonctionnement deux fois plus large.

En effet, après combinaison et sommation des signaux dans le deuxième BIFFAC (B) , et amplification par les amplificateurs (24) de sortie, les signaux apparaissant sur les lignes de sortie (35-38) du deuxième BIFFAC (B) sont raccordés par leurs entrées auxiliaires (41-44) aux amplificateurs (24) de sortie du premier BIFFAC (A). Il faut veiller à cette occasion de respecter les relations de phase et d'amplitude des signaux se propageant sur les différentes voies, comme dans le cas précédent. Notamment, il faut que le temps de propagation dans le deuxième BIFFAC (B) soit plus court que dans le premier BIFFAC (A), par le temps de propagation entre les deux BIFFACs, car il faut que les signaux, ayant traversés les filtres (F7-F12) du deuxième BIFFAC (B), arrivent en même temps sur les entrées des amplificateurs (24) de sortie du premier BIFFAC (A) que les signaux ayant traversés les filtres (F1-F6) du premier BIFFAC (A). Il est également possible de raccorder un troisième BIFFAC en parallèle de la même manière, moyennant les entrées auxiliaires (45-48) des amplificateurs (24) de sortie du deuxième BIFFAC (B).

Il est ainsi possible de prévoir, sur un nombre de filtres donné pour couvrir une bande de fréquences maximale donnée de signaux d'entrée, ce nombre de filtres passe-bande étant choisi en fonction de la flexibilité de configurations désirée, que ce nombre sera divisé en un certain nombre de BIFFACs modulaires, chaque BIFFAC comportant un certain nombre de filtres intégrés sur un ou deux substrats, et toute la matrice de commutation et de sommation étant intégrée sur un autre substrat ou, dans une autre réalisation préférée, le même. Par exemple, la configuration de l'exemple de la figure 2 montre deux fois six filtres intégrés sur deux substrats, avec, pour deux matrices six entrées quatre sorties, deux autres substrats. Le niveau d'intégration sera choisi aussi élevé que possible, pour réduire la masse et l'encombrement de l'ensemble, mais aussi pour minimiser des variations de caractéristiques des filtres en fonction de variations en température.

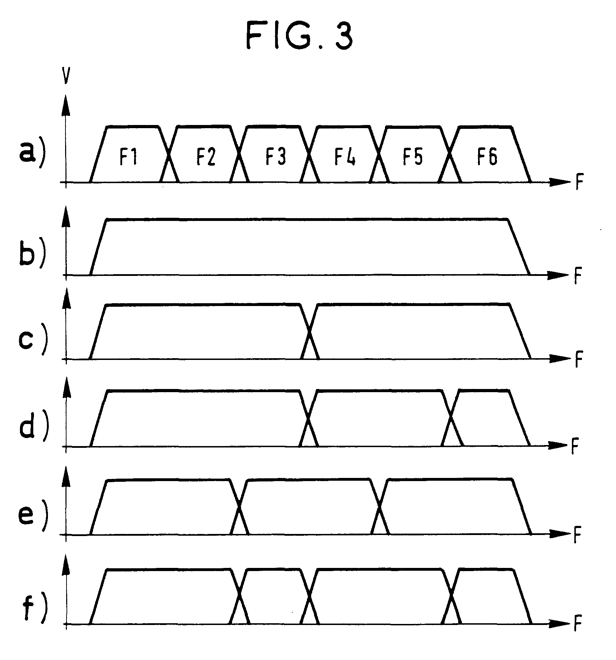

La figure 3 montre plusieurs différents plans de fréquence de filtrages qui peuvent être réalisés avec l'exemple d'un BIFFAC élémentaire montré sur la figure 1. Sur la première ligne (a), nous avons la réponse en amplitude (V) vs. fréquence (f) d'un banc (1) de filtres passe-bande selon la figure 1.

Dans le cas montré sur la ligne (b) de cette figure, les commutateurs sont tous dans la même position, et orientent les signaux vers une seule sortie. De cette manière, les signaux provenant des différents filtres passe-bande sont combinés pour rendre un filtrage de bande d'une largeur de six fois la bande élémentaire d'un seul filtre élémentaire. Pour assurer que l'amplitude du signal ainsi filtré ne présente pas de distorsion, il est important que les filtres élémentaires soient accordés en phase et en amplitude entre eux, selon une caractéristique essentielle de l'invention.

Sur la ligne (c) de cette figure, on voit le plan de fréquence d'un filtrage en deux bandes de fréquence, chaque bande recouvrant trois bandes élémentaires des filtres élémentaires du BIFFAC. Ce filtrage peut être obtenu en plaçant les commutateurs de trois filtres élémentaires voisin sur une position correspondant à une première sortie, et les commutateurs des trois autres sur une position correspondant à une deuxième sortie.

Sur la ligne (d) de cette figure, un plan de fréquence correspondant à un filtrage de trois bandes de fréquence de largeurs différentes est montré. Une première bande regroupe les signaux des bandes élémentaires correspondant aux filtres F1, F2, F3 ; une deuxième bande regroupe les signaux des bandes élémentaires correspondant aux filtres F4, F5 ; et une dernière bande correspondant à la bande élémentaire du filtre F6. Ces différentes bandes sont le résultat des positions des commutateurs comme dans le cas précédent. On constate que la matrice de commutation et de combinaison selon l'invention procure une grande souplesse de filtrage car il permet, au moyen d'une simple commutation, de configurer des filtres de largeurs de bande différentes et de fréquences centrales différentes, et aussi de reconfigurer à volonté ces plans de fréquence.

Sur la ligne (e) de cette figure, l'on voit une autre configuration en trois sorties à trois bandes de fréquence, cette fois de largeurs égales. Chaque bande comprend deux bandes élémentaires : F1 + F2, F3 + F4, F5+ F6.

Sur la ligne (f) de cette figure, on voit un dernier exemple, destiné à servir quatre sorties avec quatre bandes de fréquence. Dans cet exemple, il y a deux bandes qui correspondent aux bandes élémentaires (F3, F6), et deux bandes deux fois plus larges, correspondant respectivement aux filtres élémentaires F1+F2, et F4+F5.

Il est évident à l'examen des exemples fournis sur cette figure, que les configurations montrées ne constituent pas une liste exhaustive ; d'autres combinaisons de filtres sont bien sûr possibles utilisant le BIFFAC selon l'invention.

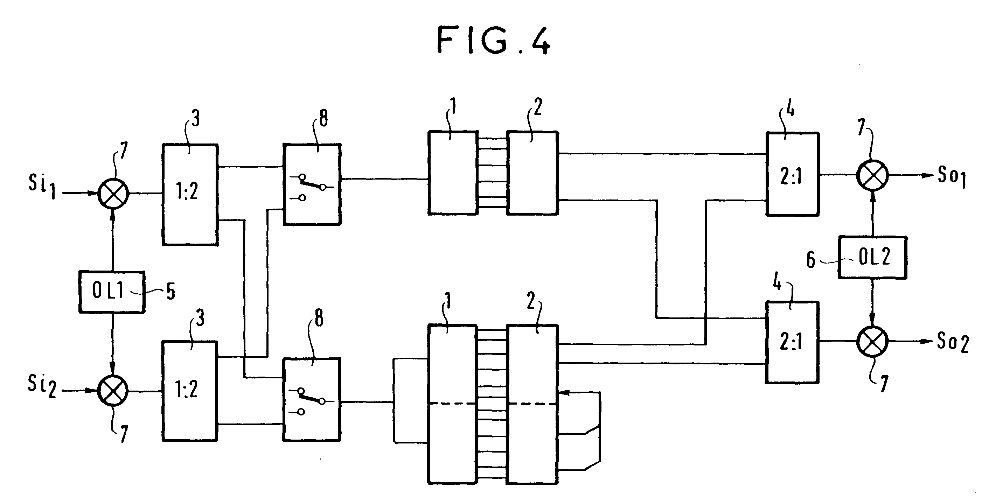

La figure 4 représente schématiquement un premier exemple d'architecture de charge utile utilisant le dispositif de BIFFAC selon l'invention, apte à effectuer des commutations bande étroite. Dans ce type de commutateur, la bande traitée totale est limitée, pouvant être de l'ordre de 60 MHz, par exemple. La bande en Fréquence Intermédiaire (FI) est la même que la bande des signaux d'entrée (Si₁, Si₂) et les signaux de sortie (So₁, So₂) ; la bande FI est l'image translatée de la bande en hyperfréquence et les signaux conservent leur position spectrale entre les entrées et les sorties.

On voit sur la figure que les deux signaux d'entrée (Si₁, Si₂) sont appliqués sur une entrée des deux mélangeurs respectifs (7) avec un signal provenant d'un oscillateur local OL1 (5) appliqué sur l'autre entrée des deux mélangeurs (7), pour effectuer une translation de fréquence vers FI. Ensuite, les signaux translatés FI sont acheminés vers des coupleurs 3dB (3) pour diviser chaque signal en deux voies, qui sont ensuite acheminés sur deux commutateurs DPST (8).

Pour une bande limitée à 60 MHz, et trois BIFFACs de 20 MHz environ (hormis les bandes de garde), la connectivité doit être limitée à 2 liaisons montantes. La flexibilité sur les voies montantes consiste à leur attribuer 18 ou 36 MHz par commutation moyennant ces deux commutateurs (8) soit vers un seul BIFFAC (1,2) sur la voie supérieure, soit vers le groupe de deux BIFFACs sur la voie inférieure de la figure 4. Le seul BIFFAC sur la voie supérieure est, par exemple, conforme à celui de la figure 1, ayant six filtres élémentaires (F1-F6) de 3 MHz chaque, pour un total de 18 MHz. Les deux BIFFACs sur la voie inférieure sont, par exemple, conformes à ceux de la figure 2, ayant 12 filtres élémentaires (F1-F12) de 3 MHz chaque, pour un total de 36 MHz.

Les signaux à la sortie des BIFFACs sont ensuite acheminés à travers des coupleurs combineurs (4) vers les premières entrées de deux mélangeurs (7), qui ont sur leur deuxième entrée un signal provenant d'un deuxième oscillateur local OL2 (6), qui effectue une deuxième translation de fréquence depuis FI vers une fréquence RF de liaison descendante. Cette fréquence RF sera en général différente de la fréquence RF des liaisons montantes pour éviter des interférences éventuelles entre les voies d'émission et de réception.

Cette solution utilise les transpositions de fréquence communes entre entrées ou sorties. Dans le cas de l'émission canalisée, les fréquences des transpositions FI vers hyperfréquence (RF) doivent être adaptées pour re-compacter le spectre des liaisons descendantes pour les diriger vers les emetteurs de puissance (TOP, SSPA, ...). Les émetteurs de puissance délivrent les signaux de sortie So₁ et So₂ dans des liaisons descendantes qui peuvent être dirigées vers des empreintes au sol distincts ou confondus.

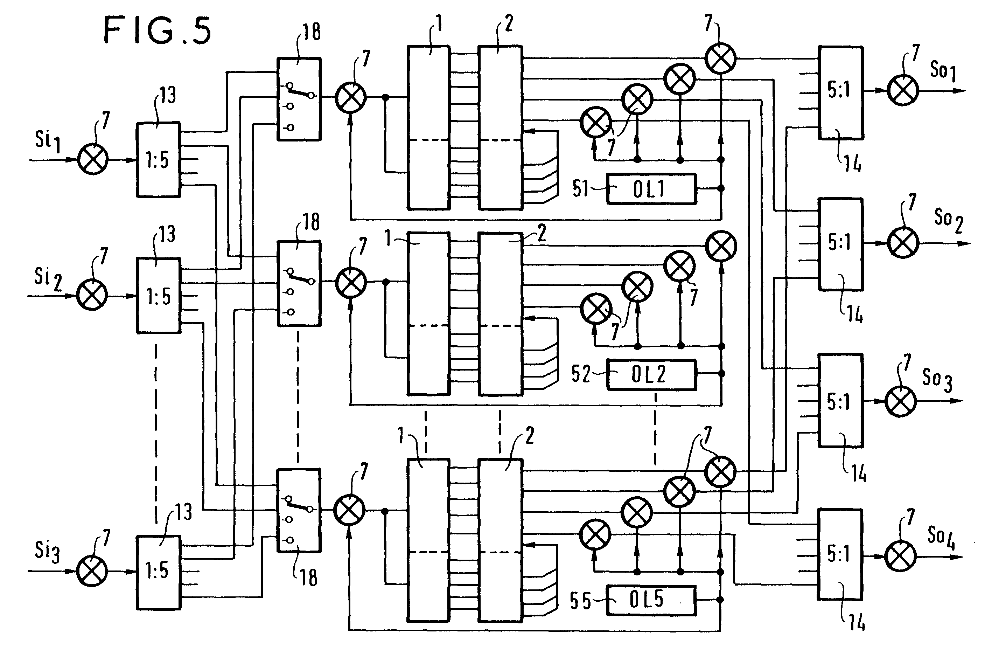

La figure 5 représente schématiquement un autre exemple d'architecture de charge utile utilisant plusieurs dispositifs de BIFFAC selon l'invention, apte à effectuer des commutations bande large. Dans ce type de commutateur, la bande traitée est plus large que dans le cas précédent, par exemple de 125 à 250 MHz de large. Cependant, la bande FI peut être limitée en réalisant une transposition de fréquence spécifique à chaque couple de BIFFAC, au moyen de plusieurs oscillateurs locaux 51, 52,...55 à des fréquences différentes. Se référant à la figure, nous avons choisi comme exemple une configuration de trois spots en liaisons montantes, avec les signaux d'entrée Si₁, Si₂, Si₃ ; et quatre spots en liaisons descendantes, avec les signaux de sortie So₁, So₂, So₃, So₄. Dans cet exemple, la bande utile, par exemple de 250 MHz, sera divisé en cinq parties pour être appliqué aux entrées de cinq couples de BIFFACs.

Les signaux d'entrée Siₓ sont d'abord translatés vers une première fréquence intermédiaire au niveau des premiers mélangeurs 7, avant d'être divisés en puissance par les coupleurs 1:5 (13), qui acheminent les signaux vers des commutateurs 3PST (18). Ces commutateurs 18 sélectionnent le spot d'entrée qui sera ensuite appliqué à un deuxième mélangeur 7, dont la deuxième entrée provient de l'un des oscillateurs locaux 51, 52, ... 55. Chacun de ces oscillateurs aura une fréquence différente de celle de son voisin immédiat, la différence étant égale à la largeur de bande d'un couple de BIFFACs 1,2. De cette manière, la bande large des signaux d'entrée Siₓ est découpée en plusieurs sous-bandes , d'une largeur de bande plus étroite (cinq dans le présent exemple), qui sont ensuite translatées vers une bande de fréquence intermédiaire unique (FI BIFFAC) pour attaquer les cinq BIFFACs identiques.

A titre d'exemple, pour une bande d'entrée de 200 MHz de large, cinq bandes de 40 MHz chaque peuvent être obtenues par des transpositions par des fréquences d'oscillateurs locaux différentes les unes des autres par 40 MHz, et application des signaux transposés sur des couples de BIFFACs ayant une largeur de bande de 40 MHz. Dans l'architecture de cet exemple, la fréquence centrale de tous les cinq BIFFACs sera la même ; seule la fréquence de l'oscillateur local 51, 52,...55 diffère pour chaque sous-bande.

Après démultiplexage en fréquence dans les cinq BIFFACs, et commutations effectuées sous les ordres d'une commande externe (non-montrée), les signaux FI sont au nombre de quatre à la sortie des matrices de commutation 2, et sont acheminés respectivement sur quatre mélangeurs 7, alimentés à leur deuxième entrées par le même oscillateur local (51, 52,... 54) utilisé pour la conversion vers la FI BIFFAC, avec pour résultat une conversion de fréquence inverse à celle appliquée à l'entrée des BIFFACs. Les sous-bandes de fréquence seront alors restaurées dans leurs relations entre elles, c'est-à-dire que chaque sous-bande aura une fréquence centrale différente de celle de son voisin immédiat, la différence étant égale à la largeur de bande d'un couple de BIFFACs 1,2.

Dans l'exemple de cette figure, il y a quatre spots de liaisons descendantes, qui auront à véhiculer quatre signaux de sortie So₁,...So₄. Les quatres mélangeurs sur la sortie de chaque BIFFAC correspondent à ces quatres spots. Le spot de sortie est alors déterminé par la matrice de commutation et de combinaison 2 pour chaque BIFFAC. Les signaux en FI BIFFAC sont, après mixage et translation en fréquence dans les mélangeurs 7, recombinés dans les coupleurs 5 : 1 (14), pour reconstituer les signaux de sortie dans les spots. Il ne reste qu'une translation en fréquence vers la fréquence HF de la liaison descendante, effectuée par un dernier banc de mélangeurs 7 juste avant l'amplification de puissance (non-montrée).

Parce que le nombre de BIFFAC est limité et que la connectivité peut être importante : 3 X 3 voir 4 X 4, il est intéressant pour la flexibilité d'opérer des recouvrements de fréquence des BIFFACs, ce qui signifie d'avoir des canaux non utilisés si on ne réutilise pas les fréquences. Grâce à cette architecture on obtient une résolution et une souplesse dans l'allocation de spectre aux différentes liaisons. La pénalité de cette architecture se trouve dans le nombre élevé de transpositions de fréquences. Le nombre de fréquences d'oscillateurs locaux est, lui, limité au nombre de couples de BIFFACs. L'architecture montrée sur cette figure inclut une transposition de fréquence en deux étapes : HF --> FI₁ -->FI₂.

Le passage en FI₁ (au voisinage de 650 MHz, par exemple), permet d'effectuer un meilleur filtrage avant mélange (pour éliminer du bruit de la bande image), ou après (pour éliminer les produits de mélange indésirés). En particulier, sur chaque sortie correspondant à une liaison descendante un filtre passe-bande de largeur égale à la bande d'entrée peut être ajouté pour éliminer les produits de mélange indésirables.

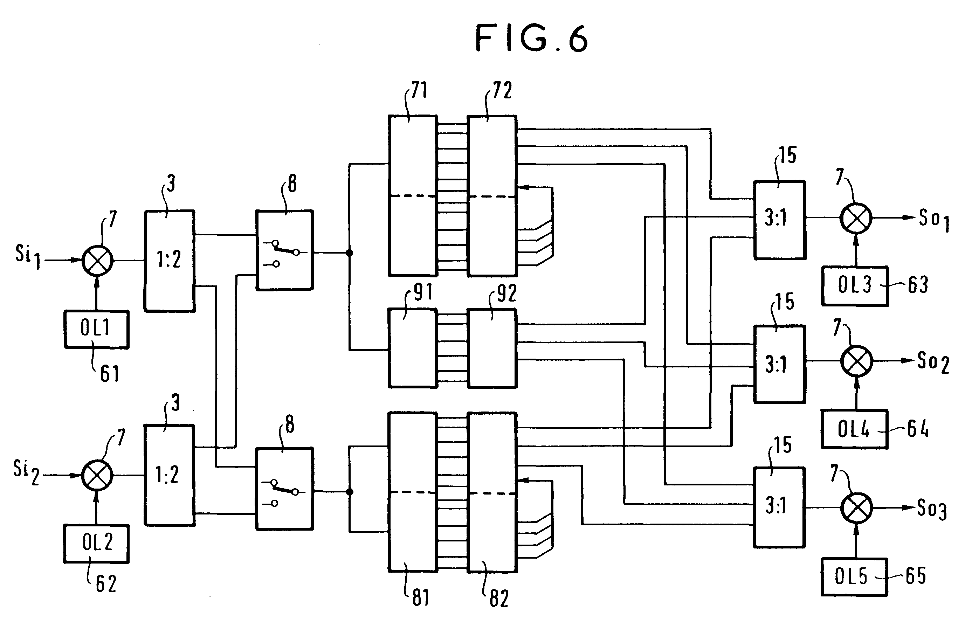

La figure 6 représente schématiquement un autre exemple d'architecture de charge utile utilisant plusieurs dispositifs de BIFFAC selon l'invention, apte à effectuer des commutations à bande "intermédiaire". Cette configuration représente un compromis entre les deux solutions des figures 4 et 5, ou le nombre de BIFFACs est plus grand que dans le cas de la figure 4, et éventuellement plus petit que dans le cas de la figure 5. On choisit le nombre de bancs de filtres au nombre de pinceaux fins d'entrée : dans l'exemple de cette figure 6, ces pinceaux sont au nombre de 2. La principale différence entre ce schéma et le précédent (fig. 5) réside dans l'absence de changements de fréquences intermédiaires.

Nous avons, comme dans les deux exemples précédents, des signaux d'entrée Si₁, Si₂ provenant de liaisons montantes distinctes, appliqués aux premières entrées des mélangeurs respectifs 7 . Aux deuxièmes entrées de ces mélangeurs, l'oscillateur local 61 fournit une première fréquence pour effectuer une translation du signal Si₁ vers une première fréquence intermédiaire FI₁ ; et un deuxième oscillateur local 62 fournit une deuxième fréquence pour effectuer une translation du signal Si₂ vers une deuxième fréquence intermédiaire FI₂.

Le nombre d'ensembles de BIFFACs à des fréquences différentes est fixé par la capacité maximale attribuée à chaque pinceau, c'est-à-dire la largeur de bande maximale allouée à chaque signal d'entrée Si₁, Si₂ . Au moyen des coupleurs 3 et des commutateurs DPST 8, les signaux d'entrée Si₁, Si₂ sont acheminés soit sur un premier ensemble de BIFFACs 71, 72 ; soit sur un deuxième ensemble de BIFFACs 81, 82 . Dans notre exemple, nous avons choisi une largeur de bande plus grande pour le premier ensemble 71, 72 pour en illustrer le principe. Le mode de fonctionnement, généralisable à un plus grand nombre de pinceaux d'entrée, est le suivant : le trafic de chaque pinceau subit la même translation de fréquence plus la somme de la bande allouée aux pinceaux précédents. Ceci suppose que les fréquences des oscillateurs locaux 61, 62, ... sont différentes par pas de 18 ou de 36 MHz (nominaux, exclusives de bandes de garde), pour être compatibles avec des canaux classiques de transpondeurs actuels.

Après commutation et sommation dans les ensembles BIFFACs 71, 72, 81, 82, ..., les signaux sont regroupés par les coupleurs de sortie 15, avant d'être transposés en fréquence vers les fréquences des pinceaux de sortie. La transposition de fréquence de chaque pinceau de sortie est égale à une fréquence constante, plus une fréquence qui représente la somme des largeurs de bande des pinceaux attribués ultérieurement, par symétrie avec les transpositions de fréquence effectuées à l'entrée.

Ceci requiert, dans notre exemple avec trois pinceaux de sortie, trois oscillateurs locaux 63, 64, 65 ayant des fréquences différentes. Le résultat est que les signaux de sortie So₁, So₂, So₃ ont des fréquences différentes mais en bandes de fréquence contigües, c'est-à-dire que la sortie est canalisée.

L'attribution des bandes de fréquences doit prendre en compte le fait qu'il n'est pas possible d'affecter des bandes de fréquences à une même sortie, à la même fréquence centrale. Des algorithmes existent pour éviter ce genre de phénomène, qui sont identiques à ceux d'une gestion de trame en AMRT. Les stations au sol sont supposées coopératives.

Les différentes architectures décrites dans ces trois dernières figures permettent d'avoir une idée des exemples qui peuvent être développés à partir des dispositifs BIFFACs selon l'invention. D'autres architectures plus complexes seront facilement imaginées par l'homme de l'art à partir des principes exposés ci-dessus, sans pour autant sortir du cadre de la présente invention. L'invention permet de gagner une meilleure flexibilité de gestion de ressources embarquées, avec des pénalités minimales de poids et d'encombrement, et avec un besoin d'équipement de redondance minimisé par rapport à l'art antérieur.

## Revendications

1. Dispositif de banc intégré de filtres associables par commutation (acronyme : BIFFAC), pour commutation de signaux d'entrée (Si) sur n voies d'entrée vers des signaux de sortie (So) sur m voies de sortie , chaque signal (Si; So) ayant une fréquence centrale (F₁, F₂, F₃ ... ) et occupant une largeur de bande ΔΦ autour de cette fréquence centrale ; ce dispositif comprenant au moins p filtres passe-bande d'une largeur de bande ΔΦ, et dont les fréquences centrales fⱼ, j étant un nombre entier entre 1 et p inclus, sont telles que la différence en fréquence entre les fréquences centrales de deux filtres voisins en fréquence fⱼ, fⱼ₊₁ est sensiblement égale à la largeur de bande passante ΔΦ du filtre passe-bande, le nombre p étant choisi selon la bande la plus large du signal à commuter ΔFₘₐₓ = pΔΦ ; lesdits signaux d'entrée (Si) étant appliqués chacun à l'entrée de l'un des p filtres ; ce dispositif **comprenant** en outre au moins une matrice de commutation et de combinaison, ladite au moins une matrice ayant de multiples entrées au moins au nombre de p et de multiples sorties au moins au nombre de m raccordées à autant d'amplificateurs (24) de sortie, lesdites entrées de ladite matrice étant connectées auxdits filtres passe-bande de façon à récolter les signaux qui traversent ces filtres ; ce dispositif **caractérisé en ce qu'**il comprend une pluralité de BIFFACs élémentaires, chaque BIFFAC élémentaire comportant un nombre de filtres inférieur à p, avec la somme des nombres de filtres de chaque BIFFAC élémentaire étant au moins égal à p, les sorties de chaque BIFFAC élémentaires étant raccordées en parallèle aux entrées des amplificateurs de sortie des autres BIFFACs élémentaires, **et caractérisé en ce que** les temps de propagation desdits signaux à travers lesdits filtres et les différents chemins à travers la dite au moins une matrice de commutation sont tels que lesdits signaux sont accordés en phase, les signaux étant en outre accordés en amplitude.

2. Dispositif selon la revendication 1, **caractérisé en ce que** lesdits filtres passe-bande sont réalisés en technologie de composants d'ondes acoustiques de surface OAS.

3. Dispositif selon la revendication 2, **caractérisé en ce que** plusieurs q desdits filtres passe-bande OAS sont intégrés sur un seul substrat, et **en ce que** ledit banc de filtres associables est composé de r = p/q substrats chacun comportant q filtres passe-bande.

4. Dispositif selon la revendication 1, **caractérisé en ce que** lesdits filtres passe-bande sont réalisés en technologie numérique.

5. Dispositif selon la revendication 3, **caractérisé en ce que** ladite matrice de commutation et combinaison est intégrée avec au moins q filtres passe-bande dans un même boîtier formant ainsi un seul module dit de commutation transparente.

6. Dispositif selon la revendication 5 **caractérisé en ce que** ladite matrice et lesdits filtres passe-bande sont intégrés sur le même substrat.

7. Dispositif selon l'une quelconque des revendications 2 à 3, **caractérisé en ce que** ledit substrat est de niobate de lithium LiNbO₃.

8. Dispositif selon l'une quelconque des revendications 2 à 3, **caractérisé en ce que** ledit substrat est de tantalate de lithium LiTaO₃.

9. Dispositif selon l'une quelconque des revendications 2 à 3, **caractérisé en ce que** ledit substrat est de quartz.

10. Charge utile dans le domaine spatial, pour permettre la commutation transparente de signaux (Si) sur n voies d'entrée vers des signaux (So) sur m voies de sortie, comportant un dispositif BIFFAC selon l'une quelconque des revendications précédentes.

11. Charge utile selon la revendication 10, **caractérisé en ce qu'**il comprend en outre au moins un ensemble de changement de fréquences.

12. Charge utile selon la revendication 11, **caractérisé en ce que** ledit ensemble de changement de fréquences comprend deux sous-ensembles de changement de fréquences : un premier sous-ensemble qui effectue un premier changement depuis la fréquence du signal d'entrée (Si) vers une fréquence intermédiaire FI, utilisant un premier oscillateur local qui est de la même fréquence pour tous les signaux et tous les BIFFACs, et après filtrage dans lesdits filtres et après commutation et combinaison en phase dans lesdites matrices, un deuxième sous-ensemble effectue un deuxième changement de fréquence, utilisant un deuxième oscillateur local, depuis FI vers une fréquence finale du signal de sortie So pour la liaison descendante ; de façon à ce que la largeur de bande en Fréquence Intermédiaire soit la même que la largeur de bande du signal (Si) d'entrée et du signal (So) de sortie.

13. Charge utile selon la revendication 11, **caractérisé en ce que** ledit ensemble de changement de fréquences comprend trois sous-ensembles de changement de fréquences, qui effectuent quatre changements successifs de fréquences : un premier changement depuis la fréquence du signal d'entrée (Si) vers une première fréquence intermédiaire (FI₁) est effectué utilisant une seule fréquence d'oscillateur local pour tous les signaux d'entrée (Si) ; un deuxième changement de fréquence vers une deuxième fréquence intermédiaire (FI₂) avant l'application à l'entrée desdits dispositifs selon la revendication 1 (BIFFACs), tous les BIFFACs ayant la même fréquence centrale, cette deuxième fréquence (FI₂) étant la même pour tous les BIFFACs, ce qui demande plusieurs fréquences d'oscillateurs locaux, au moins un pour chaque BIFFAC ; après filtrage dans lesdits filtres, et après commutation et combinaison en phase dans lesdites matrices, un troisième changement de fréquences est effectué vers la première fréquence intermédiaire (FI₁), utilisant les mêmes oscillateurs locaux que dans le changement précédent ; et enfin un quatrième changement de fréquence est effectué par le troisième sous-ensemble vers une fréquence finale du signal (So) de liaison descendante.

14. Charge utile selon la revendication 11, **caractérisé en ce que** ledit ensemble de changement de fréquences comprend un sous-ensemble de changement de fréquences pour chaque signal (Si) d'entrée d'une liaison montante et pour chaque signal (So) de sortie d'une liaison descendante, et **en ce que** la répartition des fréquences d'utilisation est effectuée de telle manière que les largeurs de bande des signaux d'entrée (Si) et de sortie (So) sont des multiples en nombre entier des largeurs de bande élémentaire d'un filtre d'un BIFFAC.

## Patentansprüche

1. Integrierte Filterbankvorrichtung mit durch Umschaltung assoziierbaren Filtern (Abkürzung BIFFAC) zur Umschaltung von Eingangssignalen (Si) auf n Eingangskanälen auf Ausgangssignale (So) auf m Ausgangskanälen, wobei jedes Signal (Si; So) eine Mittenfrequenz (F₁, F₂, F₃ ... ) hat und eine Bandbreite ΔΦ um diese Mittenfrequenz belegt, wobei die Vorrichtung wenigstens p Bandpassfilter einer Bandbreite ΔΦ umfasst, deren Mittenfrequenzen fⱼ, wobei j eine ganze Zahl zwischen 1 und p einschließlich ist, derart sind, dass die Frequenzdifferenz zwischen den Mittenfrequenzen zweier frequenzmäßig benachbarter Filter fⱼ, fⱼ₊₁ im wesentlichen gleich der Breite des Durchgangsbandes ΔΦ des Bandpassfilters ist, wobei die Zahl p entsprechend dem breitesten Band des umzuschaltenden Signals ΔFₘₐₓ = pΔΦ ausgewählt ist, wobei die Eingangssignale (Si) auf jeweils den Eingang eines der p Filter gelegt sind, wobei die Vorrichtung ferner wenigstens eine Umschaltungs- und Kombinationsmatrix umfasst, diese wenigstens eine Matrix eine Mehrzahl von wenigstens p Eingängen sowie eine Mehrzahl von wenigstens m an gleich viele Ausgangsverstärker (24) angeschlossenen Ausgängen hat, und die Eingänge der Matrix an die Bandpassfilter angeschlossen sind, um die diese Filter durchlaufenden Signale aufzufangen, **dadurch gekennzeichnet, dass** sie eine Mehrzahl elementarer BIFFACs umfasst, wobei jedes elementare BIFFAC eine Anzahl von Filtern kleiner als p umfasst, wobei die Summe der Anzahl von Filtern jedes elementaren BIFFACs wenigstens gleich p ist, die Ausgänge jedes dieser elementaren BIFFACs parallel an die Eingänge der Ausgangsverstärker der anderen elementaren BIFFACs angeschlossen sind, und **dadurch kennzeichnet, dass** die Ausbreitungszeiten der Signale durch die Filter und die verschiedenen Wege durch die wenigstens eine Umschaltmatrix derart sind, dass die Signale in Phase abgestimmt sind, und dass die Signale ferner in Aplitude abgestimmt sind.

2. Vorrichtung nach Anspruch 1, **dadurch gekennzeichnet, dass** die Bandpassfilter in akustischer Oberflächenwellentechnologie (SAW) realisiert sind.

3. Vorrichtung nach Anspruch 2, **dadurch gekennzeichnet, dass** mehrere der SAW-Bandpassfilter auf einem einzigen Substrat integriert sind, und dass die Bank von assoziierbaren Filtern aus r=p/q Substraten aufgebaut ist, die jeweils q Bandpassfilter umfassen.

4. Vorrichtung nach Anspruch 1, **dadurch gekennzeichnet, dass** die Bandpassfilter in Digitaltechnologie realisiert sind.

5. Vorrichtung nach Anspruch 3, **dadurch gekennzeichnet, dass** die Umschaltungs- und Kombinationsmatrix mit wenigstens q Bandpassfiltern in einem gleichen Gehäuse integriert ist, das so ein einzelnes sogenanntes transparentes Umschaltungsmodul bildet.

6. Vorrichtung nach Anspruch 5, **dadurch gekennzeichnet, dass** die Matrix und die Bandpassfilter auf dem gleichen Substrat integriert sind.

7. Vorrichtung nach einem beliebigen der Ansprüche 2 bis 3, **dadurch gekennzeichnet, dass** das Substrat aus Lithiumniobat LiNbO₃ ist.

8. Vorrichtung nach einem beliebigen der Ansprüche 2 bis 3, **dadurch gekennzeichnet, dass** das Substrat aus Lithiumtantalat LiTaO₃ ist.

9. Vorrichtung nach einem beliebigen der Ansprüche 2 bis 3, **dadurch gekennzeichnet, dass** das Substrat aus Quarz ist.

10. Raumfahrt-Nutzlast zum Ermöglichen der transparenten Umschaltung von Signalen (Si) auf n Eingangskanälen auf Signale (So) auf m Ausgangskanälen mit einer BIFFAC-Vorrichtung nach einem beliebigen der vorhergehenden Ansprüche.

11. Nutzlast nach Anspruch 10, **dadurch gekennzeichnet, dass** sie außerdem wenigstens eine Frequenzänderungsanordnung umfasst.

12. Nutzlast nach Anspruch 11, **dadurch gekennzeichnet, dass** die Frequenzänderungsanordnung zwei Frequenzänderungs-Unteranordnungen umfasst: eine erste Unteranordnung, die eine erste Änderung von der Frequenz des Eingangssignals (Si) zu einer Zwischenfrequenz FI durchführt und einen ersten lokalen Oszillator verwendet, der für alle Signale und alle BIFFACs die gleiche Frequenz hat, und nach Filterung in den Filtern und nach Umschaltung und Phasenkombination in den Matrizen eine zweite Unteranordnung, die eine zweite Frequenzänderung unter Verwendung eines zweiten lokalen Oszillators von FI zu einer Endfrequenz des Ausgangssignals So für die Abwärtsverbindung durchführt, so dass die Zwischenfrequenz-Bandbreite die gleiche wie die Bandbreite des Eingangssignals (Si) und des Ausgangssignals (So) ist.

13. Nutzlast nach Anspruch 11, **dadurch gekennzeichnet, dass** die Frequenzänderungsanordnung drei Frequenzänderungs-Unteranordnungen umfasst, die vier aufeinanderfolgende Frequenzänderungen durchführen: Eine erste Änderung von der Frequenz des Eingangssignals (Si) zu einer ersten Zwischenfrequenz (FI₁) wird durchgeführt unter Verwendung einer einzigen lokalen Oszillatorfrequenz für alle Eingangssignale (Si), eine zweite Frequenzänderung auf eine zweite Zwischenfrequenz (FI₂) vor Anwendung auf den Eingang der Vorrichtungen nach Anspruch 1 (BIFFACs), wobei alle BIFFACs die gleiche Mittenfrequenz haben, wobei diese zweite Frequenz (FI₂) für alle BIFFACs die gleiche ist, was mehrere lokale Oszillatorfrequenzen, wenigstens eine für jedes BIFFAC, erfordert; nach Filterung in den Filtern und nach Umschaltung und Phasenkombination in den Matrizen wird eine dritte Frequenzänderung auf die erste Zwischenfrequenz (FI₁) unter Verwendung der gleichen lokalen Oszillatoren wie in der vorhergehenden Änderung durchgeführt, und schließlich wird eine vierte .Frequenzänderung durch die dritte Anordnung auf eine Endfrequenz des Signals (So) der Abwärtsverbindung durchgeführt.

14. Nutzlast nach Anspruch 11, **dadurch gekennzeichnet, dass** die Frequenzänderungsanordnung eine Frequenzänderungs-Unteranordnung für jedes Eingangssignal (Si) einer Aufwärtsverbindung und für jedes Ausgangssignal (So) einer Abwärtsverbindung umfasst, und dass die Verteilung der Nützfrequenzen derart durchgeführt wird, dass die Bandbreiten der Eingangssignale (Si) und/oder Ausgangssignale (So) ganzzahlige Vielfache der Elementarbandbreiten eines Filters eines BIFFACs sind.

## Claims

1. Apparatus comprising an integrated bank of filters that are associable by switching [acronym: BIFFAC] for switching input signals (Si) on n input ports to output signals (So) on m output ports, each signal (Si; So) having a center frequency (Fᵢ, F₂, F₃,...) and occupying a bandwidth **ΔΦ** about said center frequency, the apparatus comprising at least p bandpass filters of bandwidth ΔΦ, with center frequencies fⱼ where j is an integer in the range 1 to p inclusive, the filters being such that the frequency difference between the center frequencies of two filters that are adjacent in frequency fⱼ, fⱼ₊₁ is substantially equal to the width **ΔΦ** of the passband of the bandpass filter, the number p being selected as a function of the bandwidth of the widest signal to be switched ΔFₘₐₓ = pΔΦ, said input signals (Si) each being applied to the input of one of the p filters; the apparatus further comprising at least one switching and combining matrix, said at least one matrix having not less than p inputs and not less than m outputs connected to as many output amplifiers (24), said inputs to said matrix being connected to said bandpass filters so as to pick up the signals passing through said filters; the apparatus being **characterized in that** it comprises a plurality of unit BIFFACs, each unit BIFFAC including less than p filters, with the total number of filters of each unit BIFFAC being not less than p, the ouputs of each unit BIFFAC being connected in parallel to the inputs of the output amplifiers of the other unit BIFFACs, and being **characterized in that** the propagation time of said signals through said filters and the various paths through said at least one switching matrix are such that said signals are matched in phase, the signals also being matched in amplitude.

2. Apparatus according to claim 1, **characterized in that** said bandpass filters are implemented in surface acoustic wave [SAW] component technology.

3. Apparatus according to claim 2, **characterized in that** a plurality q of said SAW bandpass filters are integrated on a single substrate, and **in that** said bank of associable filters is made up of r = p/q substrates each including q bandpass filters.

4. Apparatus according to claim 1, **characterized in that** said bandpass filters are implemented in digital technology.

5. Apparatus according to claim 3, **characterized in that** said switching and combining matrix is integrated with at least one q bandpass filters in a common housing thus forming a single "transparent switching" module.

6. Apparatus according to claim 5, **characterized in that** said matrix and said bandpass filters are integrated on a common substrate.

7. Apparatus according to claim 2 or 3, **characterized in that** said substrate is lithium niobate LiNbO₃.

8. Apparatus according to claim 2 or 3, **characterized in that** said substrate is lithium tantalate LiTaO₃.

9. Apparatus according to claim 2 or 3, **characterized in that** said substrate is quartz.

10. A payload for use in space to enable transparent switching of signals (Si) on n input ports to signals (So) on m output ports, the payload including BIFFAC apparatus according to any preceding claim.

11. A payload according to claim 10, **characterized in that** it further includes at least one frequency-changing assembly.

12. A payload according to claim 11, **characterized in that** said frequency-changing assembly comprises two frequency-changing subassemblies: a first subassembly that performs a first change from the frequency of the input signal (Si) to an intermediate frequency IF, using a first local oscillator which is at the same frequency for all of the signals and all of the BIFFACS, and after filtering in said filters and after switching and in-phase combining in said matrices, a second subassembly performs a second frequency change using a second local oscillator from IF to a final frequency of the output signal (So) for the down link; in such a manner that the bandwidth at intermediate frequency is the same as the bandwidth of the input signal (Si) and of the output signal (So).

13. A payload according to claim 11, **characterized in that** said frequency-changing assembly comprises three frequency-changing subassemblies which perform four successive frequency changes: a first change from the frequency of the input signal (Si) to a first intermediate frequency IF₁ is performed using a single local oscillator frequency for all of the input signals (Si); a second frequency change to a second intermediate frequency IF₂ prior to application to the inputs of said apparatuses according to claim 1 [BIFFACs], where all of the BIFFACs have the same center frequency, said second intermediate frequency (IF₂) being the same for all of the BIFFACs. thereby requiring a plurality of local oscillator frequencies, at least one per BIFFAC; after filtering in said filters and after switching and in-phase combining in said matrices, a third frequency change is performed to the first intermediate frequency (IF₁), using the same local oscillators as in the preceding change; and finally a fourth frequency change is performed by the third subassembly to a final frequency for the output signal (So) of the down link.

14. A payload according to claim 11, **characterized in that** said frequency-changing assembly comprises a frequency changing subassembly for each input signal (Si) of an up link and for each output signal (So) of a down link, and **in that** utilization frequencies are distributed in such a manner that the bandwidths of the input and output signals (Si) and (So) are integer multiples of the unit bandwidths of a filter of a BIFFAC.
